(19)

**Europäisches Patentamt**

**European Patent Office**

**Office européen des brevets**

(11) **EP 3 272 779 A1**

(12) **EUROPÄISCHE PATENTANMELDUNG**

(43) Veröffentlichungstag:
**24.01.2018 Patentblatt 2018/04**

(51) Int Cl.:
*C08F 299/04* (2006.01)    *C09D 167/06* (2006.01)

(21) Anmeldenummer: **16180541.1**

(22) Anmeldetag: **21.07.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **TIGER Coatings GmbH & Co. KG 4600 Wels (AT)**

(72) Erfinder:
- **HINTERSTEINER, Ingrid** 4600 Wels (AT)
- **HERZHOFF, Carsten** 4600 Wels (AT)
- **ROITNER, Thomas** 4600 Wels (AT)
- **BUCHINGER, Gerhard** 4600 Wels (AT)

(74) Vertreter: **Sonn & Partner Patentanwälte Riemergasse 14 1010 Wien (AT)**

(54) **PULVERLACKFORMULIERUNG**

(57) Die vorliegende Erfindung betrifft eine Pulverlackformulierung umfassend mindestens einen teilkristallinen thermoplastischen ungesättigten Polyester (A), zumindest ein mit diesem Polyester copolymerisierbares thermoplastisches Allyl-Präpolymer (B) und ein thermisches Initiationssystem (C) bestehend aus mindestens einem thermischen Initiator, wobei das Allyl-Präpolymer (B) ein Massenmittel der Molmasse von größer 5000 g/mol, bevorzugt von größer 10000 g/mol und besonders bevorzugt von größer 20000 g/mol aufweist und/oder eine Viskosität von 30 Pas und 200 Pas, bevorzugt zwischen 40 Pas und 170 Pas, besonders bevorzugt zwischen 50 Pas und 150 Pas.

EP 3 272 779 A1

**Beschreibung**

Die vorliegende Erfindung betrifft eine Pulverlackformulierung umfassend mindestens einen teilkristallinen thermoplastischen ungesättigten Polyester (A), mindestens ein mit diesem Polyester copolymerisierbares thermoplastisches Allyl-Präpolymer (B) und ein thermisches Initiationssystem (C).

Pulverlacke sind im Gegensatz zu lösungsmittelbasierten Lacken eine sehr umweltschonende Form der Beschichtung. Insbesondere der beinahe vollständige Materialnutzungsgrad, die VOC-Freiheit als auch die einfache Applikation führen zu einer Zunahme des Marktanteils von Pulverlacken. Aufgrund der relativ hohen Einbrenntemperaturen, die typischerweise zwischen 150 und 200 °C liegen, stellt die Beschichtung von hitzeempfindlichen Substraten mittels Pulverlacken jedoch eine technologische Herausforderung dar.

Für die Beschichtung von hitzeempfindlichen Substraten wurden bisher üblicherweise beschleunigte Epoxy/Polyester-Pulverlacke (Hybridpulverlacke) eingesetzt, welche sich durch niedrige Einbrenntemperaturen und eine im Vergleich zu reinen Epoxidharz-Pulverlacken deutlich bessere UV Beständigkeit auszeichnen. Neben den genannten Hybridformulierungen wurden in der Vergangenheit als auch gegenwärtig radikalisch-härtende Systeme eingesetzt.

Für die Beschichtung temperaturempfindlicher Substrate mittels radikalisch härtenden Pulverlacken gibt es einige Dokumente, die (teils oligomere) Vinyl- oder Allyletherurethane in Kombination mit ungesättigten Polyester vorschlagen, wie beispielsweise EP 2 342 286 B1, WO 2010/052290 A1, EP 2 342 287 A1, WO 2014/173861 und WO 1993/019132. Obwohl insbesondere die Gruppe der Vinyletherurethane mit ungesättigten Polyestern sehr schnelle Polymerisationsreaktionen eingehen kann und deshalb für Niedertemperaturanwendungen im Pulverlackbereich gut geeignet ist, stellt die stark eingeschränkte kommerzielle Verfügbarkeit dieser Gruppe einen großen Nachteil dar. Technische Weiterentwicklungen möglicher Lackbeschichtungen sind dadurch limitiert.

Für Systeme mit den kommerziell leichter erhältlichen, stärker vorpolymerisierten Allyl-Präpolymeren gibt es eine überschaubare Anzahl von Dokumenten im Stand der Technik. Nachteilig hierbei sind die in der Literatur beschriebenen benötigten höheren Härtungstemperaturen aufgrund der wesentlich höheren Molmasse und der damit verbundenen höheren Viskosität. Diese Härtungstemperaturen liegen im Allgemeinen deutlich über denen der oligomeren Systeme.

Die EP 0 309 088 B1 beschreibt eine Pulverzusammensetzung für ein In-Mold-Verfahren enthaltend mindestens einen ungesättigten Polyester sowie zumindest ein copolymerisierbares zweites Harz und eine für die Vernetzung der Mischung ausreichende Menge eines Initiators, welcher wiederum aus einer Mischung aus einem schnellen und einem langsamen Initiator besteht. Die EP 1 043 138 A1 betrifft wärmehärtende Harze zur Verwendung als Oberflächenbeschichtung von glasfaserverstärkten geformten Artikeln in der Form, wobei die Harze in Pulverform vorliegen. Das Pulver wird dabei auf die Oberfläche der Form aufgebracht, vorzugsweise während die Oberfläche der Form ausreichend heiß ist, um die Pulverteilchen zum Schmelzen und den daraus resultierenden Film teilweise zum Aushärten zu bringen. Danach wird die so beschichtete Form mit einem flüssigen, thermisch aushärtenden Füllharz mit oder ohne Glasfaserverstärkung befüllt. Die gemeinsame Aushärtung der Beschichtung sowie des Füllharzes erfolgt unter Druck (in einer Presse). Die in diesen beiden Offenbarungen beschriebenen Systeme zielen auf die Anwendung des Powder-In-Mold-Coatings (PIMC) ab. Obwohl hier im Vergleich zu herkömmlichen Pulverlacksystemen bereits niedrigere Härtungstemperaturen erzielt werden können, liegen diese dennoch in einem Temperaturbereich mit unteren Härtungstemperaturen im Bereich von etwa 150 °C, der für hitzeempfindliche Substrate deutlich zu hoch ist. Der Verlauf spielt zudem beim PIMC keine Rolle und es kommen wesentlich höhere Schichtdicken sowie ein Aushärten unter Druck zur Anwendung, was bei Pulverbeschichtungen nicht der Fall ist. Bei radikalisch gehärteten Beschichtungen ist durch den Stand der Technik bekannt, dass es durch Luftsauerstoff zu einer Inhibierung des Härtungsprozesses an der Oberfläche kommen kann, was wiederum in weichen Oberflächen resultiert. Dies ist bei PIMC durch die Aushärtung in einer Presse unter Druck (geschlossenes System) nicht relevant, wohingegen bei Pulverbeschichtungen dieser Aspekt besonders zum Tragen kommt. Schlussendlich haben bei PIMC die ästhetischen Eigenschaften der erzielten Schicht keine Bedeutung.

Die US 3 331 891 beschreibt eine pulverförmige Zusammensetzung bestehend aus Allyl-Präpolymeren und ungesättigten Polyestern mit thermischer Härtung. Dabei beträgt das Molmassenzahlenmittel des Allyl-Präpolymers maximal 25000 g/mol und es sind pro 100 Teile Allyl-Präpolymer 5 bis 50 Teile eines ungesättigten Polyesters mit einem Schmelzpunkt zwischen 35 und 120 °C sowie maximal 10 Teile Diallylphthalatmonomer vorgesehen. Zusätzlich enthält die Zusammensetzung einen Polymerisationskatalysator. Für diese Zusammensetzung sind trotz Einsatz des Polymerisationskatalysators ebenfalls Härtungstemperaturen im Bereich von 150-160 °C notwendig, um eine ausreichende Vernetzung des Systems zu erzielen. Die in diesem Dokuments geoffenbarten Zusammensetzungen ermöglichen keine Beschichtung von temperaturempfindlichen Substraten, wobei die hohen Einbrenntemperaturen insbesondere aus dem hohen Allyl-Präpolymeranteil von mindestens zwei Drittel bezogen auf das Bindemittel resultieren. Zudem erfolgt bei dem eingesetzten Polyester keine Fokussierung auf viskositätssenkende, teilkristalline Harze, weshalb auch durch den Zusatz dieser Komponente keine Viskositätssenkung erzielt werden kann.

Die EP 0 844 286 A1 betrifft eine Pulverlackzusammensetzung mit einem dualen Härtungsmechanismus, umfassend ein Harz mit reaktiven ungesättigten Gruppen wie etwa ungesättigte Polyester, ungesättigte Polyacrylate, ungesättigte Polymethacrylate oder Mischungen davon, ein copolymerisierbares zweites Harz mit entweder einer Vinylestergruppe, einer Acrylatgruppe, einer Methacrylatgruppe, einer Allylestergruppe oder Mischungen davon, sowie einen Photoinitiator und einen thermischen Initiator. Die EP 0 980 902 A2 sowie die EP 1 538 186 A1 beschreiben beide radikalischhärtende Systeme mit UV-Initiierung. Unabhängig davon, ob duale Härtung oder Härtung mittels UV angewendet werden, sind beide Systeme für dreidimensionale Substratgeometrien nicht geeignet.

Die EP 0 957 141 B1 beschreibt ein 2K-System, wobei in der ersten Komponente ein ungesättigter Polyester und ein Radikalinitiator enthalten sind, während in der zweiten Komponente der Polymerisationsbeschleuniger vorliegt. In einem weiteren Dokument (WO 2015/158587), basierend auf einem 2K-System mit Vinyletherurethancrosslinker als Vernetzer, werden die Eigenschaften hinsichtlich des in der EP 0 957 141 B1 beschriebenen Systems basierend auf Allyl-Präpolymeren allerdings als unzureichend im Hinblick auf Lagerstabilität, Extrusionsfähigkeit und Quellvermögen beschrieben.

Die CN 102884132 A bzw. EP 2 566 923 A1 beschreibt eine wärmehärtbare Pulverbeschichtungszusammensetzung umfassend mindestens ein kristallines Polyesterharz und wenigstens ein amorphes Polyesterharz, mindestens ein Vernetzungsmittel und wenigstens einen thermischen Radikalstarter, wobei das mindestens eine kristalline Polyesterharz und/oder das mindestens eine amorphes Polyesterharz disäureethylenische Ungesättigtheiten aufweist, das mindestens eine Vernetzungsmittel entweder kristallin oder amorph ist und das mindestens eine Vernetzungsmittel reaktive Ungesättigtheiten aufweist, die mit den ethylenischen Doppelbindungen der disäureethylenischen Ungesättigtheiten des mindestens einen kristallinen Polyesterharzes und/oder des mindestens einen amorphen Polyesterharzes vernetzt werden können. Nachteilig ist hierbei der Umstand, dass der Vernetzer molekular oder oligomer vorliegt (niedrige Molmasse) und damit während der Filmbildung oder Lagerung, folglich auch im Gebrauch, durch Diffusion an die Oberfläche migrieren kann. Im Rahmen eigener Experimente konnte dieser Effekt des "Ausblühens" niedermolekularer Verbindungen an zahlreichen Pulverlackzusammensetzungen belegt werden.

Aufgabe der vorliegenden Erfindung ist es, die Nachteile des genannten Standes der Technik im Hinblick auf Pulverlackformulierungen umfassend ungesättigte Polyester und Allyl-Präpolymere mit thermischem Initiator bezüglich der für hitzeempfindliche Substrate zu hohen Einbrenntemperaturen, von Problemen mit unzureichender Härtung bei UV oder duater Härtung, sowie der ungenügenden Lagerstabilität, schlechter Beständigkeit gegen kalte Flüssigkeiten oder mangelndem Quellvermögen zu überwinden. Als Quellvermögen im Sinne der Erfindung wird der sogenannte Wasserquelltest nach IKEA Spezifikation IOS-TM-0022 herangezogen.

Gemäß der vorliegenden Erfindung wird diese Aufgabe dadurch gelöst, dass die Pulverlackformulierung umfassend mindestens einen teilkristallinen thermoplastischen ungesättigten Polyester (A), mindestens ein mit dem Polyester (A) copolymerisierbares thermoplastisches Allyl-Präpolymer (B) und einen thermischen Initiator (C) derart ausgebildet ist, dass das Allyl-Präpolymer (B) ein Massenmittel der Molmasse größer 5000 g/mol, bevorzugt größer 10000 g/mol und besonders bevorzugt größer 20000 g/mol und/oder eine Viskosität von 30 Pas und 200 Pas, bevorzugt zwischen 30 Pas und 170 Pas, besonders bevorzugt zwischen 30 Pas und 150 Pas, aufweist. Durch die vorliegende Erfindung werden damit erstmals Pulverlacksysteme zur Verfügung gestellt, welche bei sehr niedrigen Einbrenntemperaturen ausgehärtet werden können. Insbesondere temperaturempfindliche Substrate wie holz- oder kunststoffbasierte Werkstoffe können mit der erfindungsgemäßen Pulverlackformulierung bei niedrigen Einbrenntemperaturen und kurzen Einbrennzeiten beschichtet werden. Überraschenderweise wurde gefunden, dass die erfindungsgemäße Pulverlackformulierung das Optimum einerseits aus Reaktivität, um hitzeempfindliche Substrate beschichten zu können und dabei einen ausreichenden Verlauf des Lacks zu erzielen, und andererseits von Stabilität, welche für die Verarbeitung und Lagerung des Pulverlacks notwendig ist, ergibt. Dies wird dadurch realisiert, dass zwei miteinander copolymerisierbare Bindemittelkomponenten mit sehr unterschiedlichen Eigenschaften durch Zugabe eines thermischen Initiators ausgehärtet werden. Dabei stellt das Allyl-Präpolymer (B) die (hoch)viskosere, amorphe Komponente dar, wohingegen der mindestens eine teilkristalline, ungesättigte Polyester (A) mit definiertem Schmelzpunkt oberhalb des Schmelzpunkts die viskositätssenkende Komponente ergibt.

Für die Reaktivität und Stabilität der erfindungsgemäßen Pulverlackformulierung ist der Schmelzpunkt Tm des mindestens einen teilkristallinen, ungesättigten Polyesters entscheidend. Durch die Lage des Schmelzpunktes von 90-120 °C, bevorzugt 90-110 °C, besonders bevorzugt 90-105 °C, ganz besonders bevorzugt 90-100 °C, kann die hohe Reaktivität und somit das Beschichten von temperaturempfindlichen Substraten ermöglicht werden. Schmelztemperaturen unterhalb der genannten Bereiche führen zu Problemen in der Verarbeitung der Pulverlacke, wie etwa einem Ankleben auf der Kühlwalze oder einem Kleben während des Mahlprozesses. Schmelztemperaturen, welche oberhalb der erfindungsgemäßen Temperaturbereiche liegen, bedingen höhere Einbrenntemperaturen der Pulverlacke, was für hitzeempfindliche Substrate wiederum nachteilig ist.

Günstig ist auch, wenn in der erfindungsgemäßen Pulverlackformulierung das Allyl-Präpolymer (B) ein Polymer des ortho- oder meta-Phthalsäurediallylester ist. Überraschenderweise hat sich herausgestellt, dass beim Einsatz eines solchen Präpolymers mit dem genannten Molmassenbereich, welches durch die Allylgruppen mit den Ungesättigtheiten des Polyesters (A) vernetzen kann, gleichzeitig ein gut kontrollierbares Prozessfenster für die Herstellung des Pulverlacks ermöglicht wird, ohne den Verlauf der aushärtenden Pulverlackschicht negativ zu beeinflussen. Insbesondere konnte

3

überraschenderweise durch die erfindungsgemäße Kombination des Polyesters und des Präpolymeren ein Überhitzen und folglich damit verbundener unerwünschter Vorreagieren während des Extrusionsprozesses bei gleichzeitig ausreichend hoher Dispergierung vermieden werden.

Eine bevorzugte Ausführungsform der erfindungsgemäßen Pulverlackformulierung ist dadurch gekennzeichnet, dass der ungesättigte Polyester (A) ein theoretisches Doppelbindungsäquivalentgewicht von 140 bis 1000 g/mol, bevorzugt von 200 bis 800 g/mol, besonders bevorzugt von 300 bis 600 g/mol, ganz besonders bevorzugt von 400 bis 500 g/mol aufweist.

Günstig ist auch, wenn das Allyl-Präpolymer (B) ein Doppelbindungsäquivalentgewicht von 250 bis 1000 g/mol, bevorzugt von 300 bis 500 g/mol, besonders bevorzugt von 300 bis 400 g/mol aufweist.

Die Einschränkung der Doppelbindungsäquivalentgewichte der Harze (A) und (B) auf die genannten Bereiche führt zu einer optimalen Vernetzungsdichte des Pulverlacks, bei der ein Optimum aus Stabilität und Flexibilität erzielt werden kann, was sich durch eine hervorragende Beständigkeit gegen kalte Flüssigkeiten bei gleichzeitig gutem Quellvermögen der Pulverlackschicht äußert. Darüber hinaus hat sich gezeigt, dass sich bei höheren Doppelbindungsäquivalentgewichten eine unzureichende Chemikalienbeständigkeit des Pulverlacks gegen Lösungsmittel wie beispielsweise Methylethylketon (MEK) sowie gegen kalte Flüssigkeiten ergibt. Zu hohe Doppelbindungsäquivalentgewichte führen zu einer zu reduzierten Vernetzungsdichte des Pulverlacks und zu einer verringerten mechanischen und chemischen Stabilität. Hingegen resultiert ein zu niedriges Doppelbindungsäquivalentgewicht in einer sehr hohen Vernetzungsdichte und dadurch in einem nicht zufriedenstellenden Quellvermögen. Zudem treten insbesondere bei der Synthese von Polyestern mit sehr niedrigen Doppelbindungsäquivalentgewichten verstärkt Nebenreaktionen auf. Ohne an eine Theorie gebunden zu sein wird vermutet, dass es in diesen Fällen vermehrt zur Addition von Alkoholen an die Ungesättigtheiten des Polyesters, bekannt als Ordelt saturation, kommt.

Eine weitere bevorzugte Ausführungsform der erfindungsgemäßen Pulverlackformulierung beinhaltet ein thermisches Initiationssystem (C), innerhalb dessen die Temperatur, bei der die Halbwertszeit des mindestens einen thermischen Initiators eine Minute beträgt (im Folgenden als $T_{HWZ}$ bezeichnet), zwischen 80 und 150 °C, bevorzugt zwischen 90 und 140 °C, besonders bevorzugt zwischen 100 und 130 °C liegt. In weiteren bevorzugten Ausführungsformen beinhaltet das thermische Initiationssystem zusätzlich einen Beschleuniger, um die $T_{HWZ}$ abzusenken und/oder einen Inhibitor, um frühzeitig gebildete Initiatorradikale aufzufangen und folglich frühzeitige Bindemittelvernetzungsreaktionen zu verhindern. Durch die geeignete Wahl der Komponenten des thermischen Initiationssystems wird das Aushärten des Lacks auf hitzeempfindlichen Substraten ermöglicht, und andererseits wird durch die untere Temperaturgrenze bzw. durch optionale Zugabe von Inhibitoren sichergestellt, dass es nicht zu einem verfrühten, ungewünschten Initiatorzerfall kommt.

Gemäß einer besonders bevorzugten Ausführungsform ist die erfindungsgemäße Pulverlackformulierung dadurch gekennzeichnet, dass das thermische Initiationssystem (C) ein Peroxid, bevorzugt ein Dialkylperoxid, ein Diacylperoxid oder einen Perester enthält. Es sind grundsätzlich auch andere thermische Initiatoren möglich. Wesentlich für die Selektion des erfindungsgemäßen thermischen Initiators bzw. thermischen Initiationssystems (C) ist, dass die $T_{HWZ}$ des thermischen Initiators, optional eingestellt durch Zugabe von Beschleunigern oder durch Zusatz von Inhibitoren, in einem ähnlichen Temperaturbereich liegt, wie die Temperatur, ab der das Bindemittel vernetzt werden kann. Die Temperatur, ab der die Bindemittelkomponenten, also der mindestens eine teilkristalline, ungesättigte Polyester (A) und das Allyl-Präpolymer (B) vernetzt werden können, hängt maßgeblich vom Schmelzpunkt des erfindungsgemäßen Polyesters, sowie von der Reaktivität der Ungesättigtheiten ab. Liegt die Temperatur, bei der die Halbwertszeit des Peroxids eine Minute beträgt, deutlich unterhalb der Vernetzungstemperatur des Bindemittelsystems, so kann es zum Auftreten von teils geruchsbehafteten, unerwünschten Zersetzungsprodukten kommen. Zudem geht ein Teil des Initiators verloren, der für die Polymerisation, also für die Aushärtung des Lacks, benötigt werden würde. Nicht zuletzt kann es zum ungewollten Auftreten von Vorreaktionen während des Extrudierens kommen. Im Falle einer ungünstigen Kombination aus thermischem Initiationssystem (C) und Bindemittelsystem, bestehend aus den Komponenten (A) und (B), also bei einer Zersetzung des Peroxids unterhalb des Schmelzpunkts des mindestens einen teilkristallinen, ungesättigten Polyesters (A), kommt es zu nicht zufriedenstellenden Ergebnissen im Hinblick auf Chemikalienbeständigkeit, Beständigkeit gegen kalte Prüfflüssigkeiten und Quellvermögen der fertigen Pulverlackschicht. Die letztgenannten Eigenschaften hängen auch mit der Dosierung des Peroxids zusammen.

Neben der genannten $T_{HWZ}$ ist auch die Dosierung des Peroxids relevant. Zu geringe Peroxiddosen können zu unzureichender Vernetzung der Bindemittelkomponenten führen, was wiederum in unzureichender Chemikalienbeständigkeit, schlechtem Quellvermögen sowie mangelnder Beständigkeit gegen kalte Prüfflüssigkeiten resultiert. Hingegen können zu hohe Peroxidkonzentrationen zu Vorreaktionen während der Verarbeitung, Lagerproblemen sowie zu geruchsbehafteten und/oder Ausblühungen verursachenden Zersetzungsprodukten führen. Die Dosierung des Peroxids hängt wiederum von der chemischen Struktur des Peroxids ab.

Des Weiteren ist es günstig, wenn bei der erfindungsgemäßen Pulverlackformulierung der Anteil des ungesättigten Polyesters (A) zwischen 40-75 % bezogen auf das Bindemittel beträgt. Durch die genannte Menge des mindestens einen teilkristallinen, ungesättigten Polyesters (A) kann in der erfindungsgemäßen Ausführungsform in Kombination mit dem hochviskosen Allyl-Präpolymer überraschenderweise ein zufriedenstellender Verlauf erzielt werden, da es oberhalb des Schmelzbereichs der besagten Komponente (A) zu einem starken Abfall der, bedingt durch das Allyl-Präpolymer, sonst relativ hohen Schmelzviskosität des Pulverlacks kommt.

Eine weitere bevorzugte Ausführungsform betrifft eine erfindungsgemäße Pulverlackformulierung, wobei der Anteil des Allyl-Präpolymers (B) zwischen 20-60 % bezogen auf das Bindemittel beträgt. Das amorphe, copolymerisierbare, viskose Allyl-Präpolymer (B) dient dabei als Pendant zum teilkristallinen, ungesättigten Polyester (A), mit dem es in dem angegebenen Konzentrationsbereich zu den genannten Vorteilen im Hinblick auf Verarbeitung, Verlauf und Lagerstabilität kommt.

Überraschenderweise hat sich gezeigt, dass die zuvor genannten Konzentrationsbereiche des mindestens einen teilkristallinen Polyesters mit dem zumindest einen Allyl-Präpolymer zu einem System führen, welches den Einsatz von thermischen Initiationssystemen mit geeigneter Halbwertszeit in einem Konzentrationsbereich erlauben und dabei einerseits eine noch ausreichend hohe Reaktivität mit Härtungstemperaturen ab 120 °C gewährleisten, um temperatursensible Substrate zu beschichten, und andererseits ausreichend gute Prozessierbarkeit, also keine merklichen Vorreaktionen im Extruder, sowie guten Verlauf erlauben.

Der Gegenstand der vorliegenden Erfindung wird nun anhand der nachfolgenden Beispiele näher erläutert, wobei die erfindungsgemäße Pulverlackformulierung nicht auf die in den Beispielen angegebenen speziellen Zusammensetzungen beschränkt ist.

**Definitionen**

Als der mindestens eine teilkristalline, ungesättigte Polyester (A) wird im Rahmen der Erfindung ein Polymer verstanden, welches durch geeignete Verfahren, wie Polykondensation von di- oder mehrfunktionellen organischen Säuren und/oder Anhydriden und di- oder mehrfunktionellen Alkoholen oder Umesterung von z. B. Methylestern der di- oder mehrfunktionellen organischen Säuren, hergestellt wird und eine Mindestschmelzenthalpie, bestimmt mittels DSC mit einer Heizrate von 20 K/min, von größer 40 J/g aufweist. Die ungesättigten Stellen im Polyester können durch das Einsetzen geeigneter Monomere wie ungesättigter Alkohole oder Säuren erzielt werden. Besonders geeignet im Rahmen der Erfindung sind hierbei Monomere, welche die Kristallisation begünstigen, wie etwa symmetrische Verbindungen oder Verbindungen, die das Ausbilden von Wasserstoffbrückenbindungen begünstigen. Als symmetrische Verbindungen im Rahmen dieser Erfindung werden Verbindungen mit mindestens einer Symmetrieachse bezeichnet. Bevorzugt werden auch Verbindungen eingesetzt, welche nur eine geringe Tendenz zur Ausbildung von Seitenketten haben (z.B. di-funktionelle Alkohole und Säuren).Unter dem mindestens einen Allyl-Präpolymer (B) wird im Rahmen der Erfindung ein Polymer verstanden, welches durch radikalische Polymerisation, ionische Polymerisation, Polyaddition, Polykondensation oder Ringöffnungspolymerisation oder dergleichen hergestellt wird. Die Bestimmung der Viskosität des mindestens einen Allyl-Präpolymers erfolgt gemäß ISO 2909.

Die Bestimmung des Schmelzpunktes sowie der Schmelzenthalpie wurde mittels DSC-Messung basierend auf ISO 11357-3 durchgeführt. Die in dieser Erfindung genannten Werte für Schmelzpunkt und Schmelzenthalpie beziehen sich auf die in der Norm genannte Peak Melting Temperature sowie die Enthalpy of Melting, welche während des zweiten Aufheizvorganges ermittelt wurden. Als Heizrate wurden 20 K/min verwendet. Die gleiche Vorgehensweise wurde für die Bestimmung der Temperatur herangezogen, bei der das Maximum der Vernetzungsexothermie liegt. Diese Temperatur wird im Folgenden als $T_{Cure}$ bezeichnet.

Das Doppelbindungsäquivalentgewicht des mindestens einen teilkristallinen, ungesättigten Polyesters (A) wird durch den Quotienten der gesamten Masse des hergestellten Polyesters, und der Stoffmenge des ungesättigten Monomers bzw. der Summe der Stoffmengen der ungesättigten Monomere ermittelt. Die Bestimmung des Doppelbindungsäquivalentgewichts des mindestens einen Allyl-Präpolymers (B) erfolgt durch Berechnung mittels Iodzahl bestimmt nach ISO 3931. Die Umrechnung erfolgt nach folgender Formel:

$$\text{Doppelbindungsäquivalentgewicht Allyl-Präpolymer} = \frac{\text{Iodzahl nach ISO 3931} \cdot \text{Einwaage Allyl-Präpolymer}}{\text{Molmasse}(I_2)}$$

Der Anteil des teilkristallinen, ungesättigten Polyesters (A) berechnet sich aus der eingesetzten Menge des erfindungsgemäßen Polyesters bezogen auf die gesamte Menge des Bindemittels nach folgender Formel:

$$\text{Anteil Polyester [\%]} = \frac{100 \cdot m_{\text{Polyester}}}{(m_{\text{Polyester}} + m_{\text{Allyl-Präpolymer}})}$$

Dabei bezeichnet m (Polyester) die Masse des Polyesters, wohingegen m (Allyl-Präpolymer) für die Einwaage des Allyl-Präpolymers steht. Der Anteil des Allyl-Präpolymers (B) bezogen auf das Bindemittel wird analog ermittelt:

$$\text{Anteil Allyl-Präpolymer } [\%] = \frac{100 \cdot m_{\text{Allyl-Präpolymer}}}{(m_{\text{Polyester}} + m_{\text{Allyl-Präpolymer}})}$$

**Beispiele**

Es wurden erfindungsgemäße Pulverlacke, welche die in den nachfolgenden Tabellen angegebenen Komponenten enthalten, wie folgt hergestellt:

Die einzelnen Komponenten wurden bis auf den thermischen Initiator eingewogen und mit einem Thermo Prism Pilot-3 Labormischer gemischt. Anschließend wurde der thermische Initiator zugesetzt, der Pulverlackansatz händisch durch kräftiges Schütteln erneut homogenisiert und danach auf einem Coperion ZSK 18 mit sechs Gehäuselängen extrudiert. Die Temperatureinstellungen des Extruders waren 40/40/70/70/60. Der Extruder wurde mit 1000 Umdrehungen pro Minute betrieben. Das heiße Extrudat wurde auf einer Kühlwalze (T = 4 °C) gekühlt und nach einer Rekristallisationszeit von etwa 24 Stunden auf einer ACM-2L Prallsichtermühle von Hosokawa Alpine vermahlen. Die hergestellten Pulverlacke hatten eine mittlere Partikelgröße (d50) von 25 - 50 $\mu$m. Mit diesen Pulverlacken wurden mitteldichte Faserplatten (MDF) beschichtet und bei 135 °C für 4 min in einen gaskatalytischen IR-Ofen von Heraeus zur Aushärtung gegeben. Die Flächenschichtdicke bewegte sich im Bereich von 125 $\pm$ 25 $\mu$m, die Schichtdicke der Pulverlackschicht betrug an der Kante 125 $\pm$ 25 $\mu$m.

Die für die erfindungsgemäßen Pulverlackformulierungen benötigten ungesättigten, teilkristallinen Polyester wurden durch Polykondensation hergestellt. Die typische Vorgehensweise zur Herstellung der Poylester war wie folgt:

Als Laborapparatur wurde ein Glaskolben mit 2 L Fassungsvolumen genommen, welcher mit einem Rückflusskühler zur Verringerung von Monomerenverlust (insbesondere der Alkohole), einem Rührer und einem Temperaturfühler ausgestattet war. Die Alkoholkomponenten wurden in den Glaskolben vorgelegt und die ganze Apparatur mit Stickstoff inertisiert. Nach Aufheizen auf eine Temperatur von ca. 70-80 °C wurden der Katalysator, Stabilisatoren und die Säurekomponenten zugegeben. Unter weiterer Intertisierung und leichtem Unterdruck (durch Anlegen einer Wasserstrahlpumpe) wurde die Temperatur auf 200 °C erhöht und solange gehalten, bis kein Reaktionswasser mehr gebildet wurde. Danach wurde schrittweise - sodass Schaumbildung möglichst unterdrückt wurde - der Druck auf 500 mbar reduziert und dieser Wert für 10 min gehalten. Nach erneuter Reduktion auf 300 mbar und Halten für 5 Stunden wurde das Harz entleert, abgekühlt, gebrochen und vermahlen.

Die eingesetzten Rezepturen sind in Tabelle 1 zu finden. Zusätzlich zu den angegebenen Monomeren aus Tabelle 1 wurden noch ca. 0,1 % Irgafos 168 und 0,2 % Katalysator ( Organozinnverbindungen oder Zinnoxid) zugegeben.
Die Qualität der Oberflächen, welche mit den erfindungsgemäßen Pulverlackformulierungen (Zusammensetzung siehe Tabelle 2) beschichtet wurden, wurde nach verschiedenen, nachfolgend gelisteten Kriterien beurteilt.
Die Prüfung auf zufriedenstellende Aushärtung der Formulierungen bei den jeweils gewählten Einbrenntemperaturen wurde zum einen mittels eines qualitativen Schnelltests, dem so genannten MEK-Test, durchgeführt. Zum anderen wurden weitere Prüfungen herangezogen, wie etwa die Beständigkeit gegen kalte Flüssigkeiten sowie das Quellvermögen der erfindungsgemäßen Pulverlacke.
Bei dem MEK-Test werden drei Tropfen Methylethylketon auf die zu prüfende Oberfläche getropft. Nach 20 s wird das Lösungsmittel mit einem Papiertuch abgetupft. Nach weiteren 60 s wird mit einem Härteprüfstab mit einer Prüfkraft von 1 N und einer Breite der Prüfspitze von 0,75 mm die Beständigkeit geprüft. Die Beurteilung des Ergebnisses erfolgt nach ÖNORM EN 12720. Ergebnisse mit der Einstufung von drei bis fünf (keine Kratzer auf Prüffläche, keine bis mäßige Veränderungen der Prüffläche) werden als gut, mit der Einstufung von zwei als genügend (leichte Kratzer auf der Prüffläche sind sichtbar; erhebliche Veränderung der Prüffläche) und mit der Einstufung von eins gleich ungenügend (tiefe Kratzer, starke Veränderung der Prüffläche) bewertet.
Die Beständigkeit gegen kalte Flüssigkeiten wurde geprüft nach ÖNORM EN 12720. Als Prüfflüssigkeiten dienen Kaffee und Ethanol (45% v/v), jeweils eine bzw. sechs Stunden, Paraffin und deionisiertes Wasser, jeweils 24 h. Als Quellvermögen im Sinne der Erfindung wird der sogenannte Ledro-Test nach IKEA Spezifikation IOS-TM-0022 herangezogen.
Eine Extrusion wird im Rahmen dieser Erfindung als erfolgreich gewertet, wenn sie ohne merkliche Vorreaktionen im Extruder abläuft. Vorreaktionen werden durch ein vorzeitiges zumindest teilweises Auspolymerisieren des Pulverlacks erkannt. Diese finden dann statt, wenn die Temperatur des Extrudats zu nahe bei der Temperatur liegt, bei der die Halbwertszeit des thermischen Initiators innerhalb des jeweiligen thermischen Initiationssystems eine Minute beträgt. Erfahrungsgemäß trat dies bei Austrittstemperaturen ab etwa $T_{HWZ}$-10 °C ein.

Die Prozessierbarkeit wurde des Weiteren über etwaige klebrige Rückstände während der Verarbeitung bestimmt. Das bezieht sich einerseits auf den Extrusionsprozess, also das Ankleben am Kühlaggregat (z. B. der Kühlwalze) des Extruders sowie der fertigen Formulierung während des Mahlprozesses vor dem Beschichten. Dies wird in der vorliegenden Erfindung mit "Kleben" im Falle von Anhaftungen an der Kühlwalze, am Kühlband oder in der Mühle beschrieben und im anderen Fall mit "kein Kleben" vermerkt. Als Kleben wird hier verstanden, dass für das vollständige oder Ablösen der Formulierung vom Kühlaggregat oder Mühlenkomponenten zusätzliche mechanische Einwirkung notwendig ist.

Die Beispiele 1-5 beschreiben vergleichende Formulierungen, die nicht die gewünschten Eigenschaften hinsichtlich Verarbeitbarkeit sowie erzielter mechanischer Eigenschaften der erzielten Lackschicht aufweisen.

**Beispiel 1**

In der genannten Formulierung liegt die DAP-Präpolymerkonzentration bezogen auf das Bindemittel außerhalb des erfindungsgemäß relevanten Bereichs. Die durch den großen Anteil des DAP-Präpolymers (bezogen auf das Bindemittel von 67 %) bedingte hohe Viskosität führt zu einer zu starken Erhitzung der Pulverlackformulierung und deshalb zu ausgeprägten Vorreaktionen während der Extrusion. Es konnte kein Extrudat für Abprüfungen für Beschichtungsversuche/Prüfungen gewonnen werden.

**Beispiel 2**

Die Zusammensetzung aus Beispiel 2 enthält einen Polyester mit einer Schmelztemperatur von 124 °C. Bedingt durch den hohen Schmelzpunkt kommt es zu einem ungenügenden Aufschmelzen des Polyesters vor Beginn der Aushärtung. Somit kommt es zu einem unzureichend ausgehärteten Lackfilm, was sich in einem schlechten Ergebnis im MEK- sowie im Ledrotest und der mangelnden Beständigkeit gegen kalte Flüssigkeiten widerspiegelt.

**Beispiel 3**

Beispiel 3 enthält einen Polyester mit einem Schmelzpunkt unterhalb des erfindungsgemäß genannten Intervalls. Dies führt zu Problemen während des Prozessierens, also zu einem Verkleben während der Pilotierung sowie auch nach dem Extrudieren (Kühlwalze, Mühle). Es war nicht möglich Pulverlackbeschichtungen mit diesem Ansatz herzustellen, weshalb auch die Prüfergebnisse in der Tabelle 2 nicht eingetragen sind.

**Beispiel 4**

Die genannte Pulverlackzusammensetzung weist zu hohe Doppelbindungsäquivalente und folglich eine zu niedrige Vernetzungsdichte auf. Die Verarbeitung des Pulverlacks war erfolgreich, jedoch zeigte der Lack schlechte Ergebnisse in Prüfungen hinsichtlich der Beständigkeit gegen kalte Flüssigkeiten sowie gegen MEK.

**Beispiel 5**

Beispiel 5 beschreibt eine Pulverlackformulierung mit einem thermischen Initiationssystem mit unzureichender Reaktivität. Mit den genannten Härtungsbedingungen von 135 °C für vier Minuten konnte keine ausreichende Aushärtung des Pulverlacks erzielt werden, was sich in einer sehr schlechten Beständigkeit gegen kalte Flüssigkeiten, gegen MEK sowie einem unzureichenden Quellvermögen gezeigt hat.

**Beispiel 6-10**

Die Beispiele 6-10 beschreiben Formulierungen gemäß der vorliegenden Erfindung. Bei allen Formulierungen wurden eine hervorragende Prozessierbarkeit sowie Quellbeständigkeit im Ledro-Test beobachtet.

**Tabelle 1** Polyester

| | Fumarsäure | Bernsteinsäure | 1,6-Hexandiol | 1,4-Butandiol | Theoretisches Doppelbindungsäquivalenzgewicht | SZ | OHZ | $T_m$ |
|---|---|---|---|---|---|---|---|---|
| PE 1 | 18,4 | 34,7 | 8,5 | 38,1 | 527 | 12,3 | 42,3 | 107 |
| PE 2 | 18,8 | 35,5 | | 45,5 | 514 | 9,3 | 33,4 | 124 |
| PE 3 | 18 | 29,1 | 52,6 | | 550 | 4,3 | 50,5 | 70 |
| PE 4 | 4,1 | 20,5 | 3,92 | 22,9 | 1200 | 8 | 28,4 | 105 |
| PE 5 | | 29,0 | | 38,1 | 401 | 10,0 | 37,7 | 111 |

**Tabelle 2** Pulverlackformulierungen

| | Beispiel 1 | Beispiel 2 | Beispiel 3 | Beispiel 4 | Beispiel 5 | Beispiel 6 | Beispiel 7 | Beispiel 8 | Beispiel 9 | Beispiel 10 |
|---|---|---|---|---|---|---|---|---|---|---|
| PE 1 | 23,28 | | | | 39,56 | 40,17 | 40,17 | 40,11 | | |
| PE 2 | | 40,21 | | | | | | | | |
| PE 3 | | | 40,21 | | | | | | | |
| PE 4 | | | | 47,88 | | | | | | |
| PE 5 | | | | | | | | | 35,91 | 35,91 |
| DAP iso* | 43,23 | | 26,29 | | 25,94 | 26,33 | | 26,29 | 30,59 | |
| DAP A* | | 26,29 | | | | | | | | 30,59 |
| DAP S* | | | | 18,62 | | | 26,33 | | | |
| DAP K* | | | | | | | | | | |
| tert-Butylhydrochinon | | | | | | | | 0,10 | 0,05 | |
| Modaflow Powder 6000 | 1,50 | 1,50 | 1,50 | 1,50 | 1,50 | 1,50 | 1,50 | 1,50 | 1,50 | 1,50 |
| Ti-Select TS 6200 | 27,00 | 27,00 | 27,00 | 27,00 | 27,00 | 27,00 | 27,00 | 27,00 | 27,00 | 27,00 |
| BP 50 SE | 5,00 | 5,00 | 5,00 | 5,00 | | 5,00 | 5,00 | 5,00 | 5,00 | 5,00 |
| PK 295 P | | | | | 6,00 | | | | | |
| Vorreaktionen während Extrusion | ja | nein | nein | nein | nein | nein | nein | nein | nein | nein |
| Kleben am Kühlaggregat | - | ja | ja | nein | nein | nein | nein | nein | nein | nein |
| Kleben während der Vermahlung | - | nein | - | nein | nein | nein | nein | nein | nein | nein |
| MEK-Test | - | 1 | - | 2 | 1 | 3 | 3 | 2 | 3 | 3 |
| Ledro Test / h | - | 4 | - | 8 | 4 | 48 | 48 | 48 | 24 | 48 |
| Kaffee 1 h | - | 3 | - | 3 | 2 | 5 | 5 | 4 | 5 | 4 |
| Kaffee 6 h | - | 2 | - | 2 | 2 | 5 | 4 | 2 | 5 | 3 |
| Ethanol 1 h | - | 3 | - | 5 | 4 | 5 | 5 | 5 | 5 | 5 |
| Ethanol 6 h | - | 2 | - | 5 | 3 | 5 | 5 | 5 | 5 | 5 |
| Paraffin 24 h | - | 5 | - | 5 | 5 | 5 | 5 | 5 | 5 | 5 |
| Wasser 24 h | - | 5 | - | 5 | 5 | 5 | 5 | 5 | 5 | 5 |

Anm.: an Stellen, wo keine Werte eingetragen wurden, konnte die Prüfung nicht durchgeführt werden (da beispielsweise bereits Vorreaktionen im Extruder oder sehr starkes Kleben am Kühlaggregat, sodass kein Extrudat erhalten wurde).

* Diallyl Phthalate(DAP) Harze der Firma Osaka Soda.

**Patentansprüche**

1. Pulverlackformulierung umfassend mindestens einen teilkristallinen thermoplastischen ungesättigten Polyester (A), zumindest ein mit diesem Polyester copolymerisierbares thermoplastisches Allyl-Präpolymer (B) und ein thermisches Initiationssystem (C) bestehend aus mindestens einem thermischen Initiator, wobei das Allyl-Präpolymer (B) ein Massenmittel der Molmasse von größer 5000 g/mol, bevorzugt von größer 10000 g/mol und besonders bevorzugt von größer 20000 g/mol aufweist und/oder eine Viskosität von 30 Pas und 200 Pas, bevorzugt zwischen 40 Pas und 170 Pas, besonders bevorzugt zwischen 50 Pas und 150 Pas.

2. Pulverlackformulierung nach Anspruch 1, **dadurch gekennzeichnet, dass** der ungesättigte Polyester (A) einen Schmelzpunkt zwischen 90-120 °C, bevorzugt 90-110 °C, besonders bevorzugt 90-105 °C, ganz besonders bevorzugt 90-100 °C aufweist.

3. Pulverlackformulierung nach einem der vorhergehenden Ansprüchen, **dadurch gekennzeichnet, dass** das Allyl-Präpolymer (B) ein Polymer des ortho- oder meta-Phthalsäurediallylester ist.

4. Pulverlackformulierung nach einem der vorhergehenden Ansprüchen, **dadurch gekennzeichnet, dass** der ungesättigte Polyester (A) ein Doppelbindungsäquivalentgewicht von 140 bis 1000 g/mol, bevorzugt von 200 bis 800 g/mol, besonders bevorzugt von 300 bis 600 g/mol, ganz besonders bevorzugt von 400 bis 500 g/mol aufweist.

5. Pulverlackformulierung nach einem der vorhergehenden Ansprüchen, **dadurch gekennzeichnet, dass** das Allyl-Präpolymer (B) ein Doppelbindungsäquivalentgewicht von 250 bis 1000 g/mol, bevorzugt von 300 bis 500 g/mol, besonders bevorzugt von 300 bis 400 g/mol aufweist.

6. Pulverlackformulierung nach einem der vorhergehenden Ansprüchen, **dadurch gekennzeichnet, dass** das thermische Initiationssystem (C) mindestens einen thermischen Initiator enthält, welcher **dadurch gekennzeichnet ist, dass** die Temperatur, bei der seine Halbwertszeit eine Minute beträgt, zwischen 80 und 150 °C, bevorzugt zwischen 90 und 140 °C, besonders bevorzugt zwischen 100 und 130 °C liegt.

7. Pulverlackformulierung nach Anspruch 1, **dadurch gekennzeichnet, dass** das thermische Initiationssystem (C) ein Peroxid, bevorzugt ein Dialkylperoxid, ein Diacylperoxid oder einen Perester enthält.

8. Pulverlackformulierung nach einem der vorhergehenden Ansprüchen, **dadurch gekennzeichnet, dass** der Anteil des ungesättigten Polyesters (A) zwischen 40-75 %, bezogen auf das Bindemittel, beträgt.

9. Pulverlackformulierung nach einem der vorhergehenden Ansprüchen, **dadurch gekennzeichnet, dass** der Anteil des Allyl-Präpolymers (B) zwischen 20-60 %, bezogen auf das Bindemittel, beträgt.

Europäisches
Patentamt

European
Patent Office

Office européen
des brevets

# EUROPÄISCHER RECHERCHENBERICHT

Nummer der Anmeldung

EP 16 18 0541

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 0 309 088 B1 (THIOKOL MORTON INC [US]) 15. November 1995 (1995-11-15) * Beispiele; Tabellen II-XVIII * * Seite 3, Zeilen 36-40 * * Seite 6, Zeilen 45-54 * ----- | 1-9 | INV. C08F299/04 C09D167/06 |
| X,D | EP 0 957 141 B1 (FERRO CORP [US]) 25. Februar 2004 (2004-02-25) * Ansprüche 1,6 * * Beispiele * * Seite 4, Zeilen 26-36 * ----- | 1-9 | |

RECHERCHIERTE
SACHGEBIETE (IPC)

C08F
C09D

Der vorliegende Recherchenbericht wurde für alle Patentansprüche erstellt

| Recherchenort | Abschlußdatum der Recherche | Prüfer |
|---|---|---|
| Den Haag | 3. Januar 2017 | Schlicke, Benedikt |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 18 0541

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-01-2017

| Im Recherchenbericht angeführtes Patentdokument | Datum der Veröffentlichung | Mitglied(er) der Patentfamilie | Datum der Veröffentlichung |
|---|---|---|---|
| EP 0309088 B1 | 15-11-1995 | AT 130351 T | 15-12-1995 |
| | | AU 628213 B2 | 10-09-1992 |
| | | AU 1976488 A | 06-04-1989 |
| | | AU 6125290 A | 29-11-1990 |
| | | CA 1320790 C | 27-07-1993 |
| | | CA 1321854 C | 31-08-1993 |
| | | DE 3854687 D1 | 21-12-1995 |
| | | DE 3854687 T2 | 02-05-1996 |
| | | EP 0309088 A2 | 29-03-1989 |
| | | ES 2081808 T3 | 16-03-1996 |
| | | JP 2610039 B2 | 14-05-1997 |
| | | JP H01158080 A | 21-06-1989 |
| | | MX 165237 B | 03-11-1992 |
| | | US 4873274 A | 10-10-1989 |
| EP 0957141 B1 | 25-02-2004 | CA 2270852 A1 | 11-11-1999 |
| | | DE 69914967 D1 | 01-04-2004 |
| | | DE 69914967 T2 | 30-12-2004 |
| | | EP 0957141 A1 | 17-11-1999 |
| | | ES 2216372 T3 | 16-10-2004 |
| | | US 6194525 B1 | 27-02-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2342286 B1
- WO 2010052290 A1
- EP 2342287 A1
- WO 2014173861 A
- WO 1993019132 A1
- EP 0309088 B1
- EP 1043138 A1
- US 3331891 A
- EP 0844286 A1
- EP 0980902 A2
- EP 1538186 A1
- EP 0957141 B1
- WO 2015158587 A
- CN 102884132 A
- EP 2566923 A1